# FASCICULE DE BREVET EUROPEEN

(11) **EP 2 454 131 B1**
(45) Date de publication et mention de la délivrance du brevet: **18.06.2014**
(21) Numéro de dépôt: 10745335.9
(22) Date de dépôt: 25.06.2010
(51) Int. Cl.: B60R 25/021, B60R 25/0215, B60R 16/02

(54) **SYSTÈME ÉLECTRIQUE DE VÉHICULE POUR EXÉCUTER UNE ACTION DE MANIÈRE SÉCURITAIRE**
ELEKTRISCHES SYTEM FÜR EIN FAHRZEUG ZUR SICHEREN AUSFÜHRUNG EINER AKTION
ELECTRICAL SYSTEM FOR A VEHICLE FOR SECURELY EXECUTING AN ACTION

(30) Priorité: 17.07.2009 FR 0954992
(43) Date de publication de la demande: 23.05.2012
(73) Titulaire: Peugeot Citroën Automobiles Société Anonyme, 78140 Vélizy Villacoublay (FR)
(72) Inventeur: BRINDEJONC, Vincent, F-91470 Les Molieres (FR); BENEMACHER, David, F-92140 Clamart (FR)
(86) Numéro de dépôt international: PCT/FR2010/051315
(87) Numéro de publication internationale: WO 2011/007071

(56) Documents cités:
- DE-A1- 10 052 316
- US-A1- 2004 027 239

## Description

L'invention concerne un système électrique de véhicule, notamment de véhicule automobile, pour exécuter une action de manière sécuritaire.

Plus précisément, le système électrique comprend un actionneur agencé pour exécuter une action lorsqu'un signal électrique d'enclenchement est activé, un processeur agencé pour générer un signal électrique de commande de ladite action, et un dispositif agencé pour activer le signal électrique d'enclenchement lorsque le signal électrique de commande est généré.

Le document FR2805229 divulgue par exemple un système électrique de véhicule comprenant un actionneur sous forme de système spécifique pour exécuter une action, typiquement une opération de verrouillage de système antivol, lorsqu'un signal électrique d'enclenchement, en l'occurrence un signal d'instruction de coupure. Un processeur, sous forme de système programmé de contrôle, génère un signal électrique de commande de cette action, en l'occurrence un ordre de coupure. Un dispositif sous forme de circuit logique de type ET, active le signal électrique d'enclenchement lorsque le signal électrique de commande est généré.

L'état de la technique auquel appartient ce document, confronte généralement le traitement logiciel d'un signal donné avec un traitement matériel du même signal pour palier une défaillance au sein du traitement logiciel ou du traitement matériel. Cependant une redondance de traitement du signal, ne permet pas de pallier une corruption du signal lui-même, par exemple résultant d'un court-circuit. Ceci peut avoir des conséquences fâcheuses lorsqu'il en résulte une exécution d'action incompatible avec un état dans lequel est le véhicule.

Le document DE-A-10052336 est considéré comme l'état de la technique plus proche et divulgue un système électrique de véhicule comprenant un actionneur agencé pour exécuter une action lorsqu'un signal électrique d'enclenchement est activé, un processeur agencé pour générer un signal électrique de commande de ladite action, un dispositif agencé pour activer le signal électrique d'enclenchement lorsque le signal électrique de commande est généré, un organe de contrôle agencé pour générer un signal électrique d'état ayant une valeur qui indique un état du véhicule permettant d'exécuter ladite action, une première chaîne comportant au moins un élément de détection connecté entre l'organe de contrôle et le dispositif pour générer un premier signal de contrôle qui retranscrit la valeur du signal d'état, une deuxième chaîne comportant au moins un élément logiciel de qualification connecté entre l'organe de contrôle et le dispositif pour générer un deuxième signal de contrôle qui retranscrit la valeur du signal d'état et en ce que le dispositif est agencé pour activer le signal électrique d'enclenchement à condition que le premier signal de contrôle et le deuxième signal de contrôle retranscrivent chacun la valeur du signal d'état qui indique l'état du véhicule permettant d'exécuter ladite action.

Dans le but de remédier aux problèmes posés par l'état connu de la technique, l'invention a pour objet un système électrique tel que précisé ci-dessus, remarquable en ce qu'il comprend :
- un organe de contrôle agencé pour générer un signal électrique d'état ayant une valeur alternative qui indique un état du véhicule permettant d'exécuter ladite action et ayant une valeur continue qui indique un état du véhicule ne permettant pas d'exécuter ladite action,
- une première chaîne totalement matérielle comportant au moins un élément matériel de détection connecté entre l'organe de contrôle et le dispositif pour générer un premier signal de contrôle qui retranscrit la valeur du signal d'état,
- une deuxième chaîne comportant au moins un élément logiciel de qualification connecté entre l'organe de contrôle et le dispositif pour générer un deuxième signal de contrôle qui retranscrit la valeur du signal d'état,
et en ce que le dispositif est agencé pour activer le signal électrique d'enclenchement à condition que le premier signal de contrôle et le deuxième signal de contrôle retranscrivent chacun la valeur du signal d'état qui indique l'état du véhicule permettant d'exécuter ladite action.

Avantageusement, l'élément matériel de détection est agencé pour générer le premier signal de contrôle par détection d'une présence ou d'une absence de variations de la valeur du signal électrique d'état, et l'élément logiciel de qualification est agencé pour générer le deuxième signal de contrôle par qualification d'une forme et/ou d'une fréquence du signal électrique d'état en comparaison d'un signal de référence.

Particulièrement, l'élément matériel comprend un filtre de coupure des basses fréquences.

Avec intérêt, l'actionneur comprend un moteur agencé pour actionner un pêne de façon à exécuter une action de verrouillage de colonne de direction et l'état du véhicule permettant d'exécuter l'action de verrouillage, est une vitesse nulle du véhicule.

De préférence, la valeur alternative du signal d'état est sous forme de carrés et la valeur continue du signal d'état est nulle.

Particulièrement encore, pour générer le signal électrique de commande, le processeur comprend un élément logiciel de génération connecté à un élément logiciel d'acquisition agencé pour recevoir un ordre d'exécution de ladite action sous forme numérique.

Plus particulièrement, le dispositif comprend une porte électronique de conjonction logique comportant :
- une première entrée connectée à l'élément matériel pour recevoir le premier signal de contrôle,
- une deuxième entrée connectée à l'élément logiciel de qualification pour recevoir le deuxième signal de contrôle, et
- une troisième entrée connectée à l'élément logiciel de génération pour recevoir le signal de commande.

Alternativement, l'élément logiciel de génération est connecté au logiciel de qualification de façon à générer le signal de commande si l'état du véhicule le permet, et le dispositif comprend une porte de conjonction logique comportant :
- une première entrée connectée à l'élément matériel pour recevoir le premier signal de contrôle, et
- une deuxième entrée connectée à l'élément logiciel de génération pour recevoir le signal de commande.

Plus particulièrement aussi, la deuxième chaîne comprend un mécanisme matériel anti-retour entre l'organe de contrôle et le processeur qui héberge l'élément logiciel de qualification.

L'invention sera mieux comprise, et d'autres buts, caractéristiques, détails et avantages de celle-ci apparaîtront plus clairement dans la description explicative qui va suivre faisant référence aux dessins donnés uniquement à titre d'exemple pour illustrer un mode de réalisation de l'invention et dans desquels :
- la figure 1 est une vue schématique d'un système selon l'invention;
- la figure 2 est une vue schématique d'un autre système selon l'invention.

Dans un véhicule automobile, le démarrage main libre nécessite l'utilisation d'un antivol électrique qui actuellement, agit par blocage de la colonne de direction. Cet Antivol Electrique (AVE dans la suite) est activé par un ordre d'exécution sous forme numérique, émis, généralement multiplexé avec d'autres signaux numériques, lorsque certaines conditions telles qu'une vitesse nulle du véhicule ou un arrêt du moteur, sont vérifiées. Ces conditions d'activation ne constituent pas des sécurisations suffisantes pour garantir le niveau de sécurité exigible d'un antivol de direction. En effet, le blocage de la colonne de direction en roulant est un événement incontrôlable et de sévérité maximale.

Pour garantir qu'une action sécuritaire, en l'occurrence blocage de la colonne de direction soit effectuée à bon escient et uniquement à bon escient, une solution conforme à l'invention met en oeuvre une sécurisation supplémentaire basée sur une information véhicule en mouvement transmise par une liaison filaire, indépendante du réseau multiplexé, de la façon décrite ci-après, dans le cadre de l'AVE à titre illustratif.

En référence aux figures, un organe de contrôle 4 tel qu'une unité de contrôle de frein, un processeur 10 tel qu'un microcontrôleur et un étage de commande moteur 5, sont alimentés en puissance par une alimentation électrique 9. Un signal électrique d'état, émis par l'Unité de Contrôle Frein (UC Frein), est encodé sous forme d'un signal carré si le véhicule est à l'arrêt et d'une tension nulle quand le véhicule est en mouvement.

La valeur alternative du signal carré, indique un état du véhicule qui permet d'exécuter l'action de verrouillage, de manière immunisée contre les corruptions possibles par court-circuit ou par défaut d'alimentation dont résulte généralement une tension de valeur constante nulle ou non nulle.

La valeur constante donnée par la tension nulle, indique un état du véhicule qui ne permet pas d'exécuter l'action de verrouillage, ou pour le moins une absence d'information suffisamment sure pour permettre d'exécuter l'action de verrouillage en se basant sur un signal fiable.

Le signal électrique d'état est utilisé par deux chaînes indépendantes connectées entre l'UC frein et un dispositif 2 qui comporte ici une porte électronique de conjonction logique.

La première chaîne, simple, est purement électrique ou électronique et se contente d'un unique élément matériel 1 pour détecter les fronts. Une détection de variation du signal permet de conclure que le véhicule est à vitesse nulle alors qu'une absence de variation ne permet pas de conclure que le véhicule est à vitesse nulle. La première chaîne doit de préférence couper les basses fréquences pour s'affranchir des courts circuits pouvant corrompre le signal d'entrée. Cette préconisation peut être réalisée au moyen d'un filtre passe haut incorporé dans l'élément matériel 1. Un filtre passe bande permet de s'affranchir d'éventuels parasites à haute fréquence. L'élément matériel 1 génère un premier signal de contrôle qui retranscrit la valeur du signal d'état sous forme binaire, par exemple à une valeur constante haute en présence de fronts montant et descendant et à une valeur constante basse en absence de fronts montant et descendant du signal d'état.

La seconde chaîne, utilisant le microcontrôleur ou processeur 10, est mixte électronique - logicielle. Elle permet de qualifier la forme et la fréquence du signal reçu par rapport aux caractéristiques attendues. Un élément logiciel 11 génère un deuxième signal de contrôle. Le deuxième signal de contrôle retranscrit la valeur du signal d'état sous forme binaire, par exemple à une valeur constante haute lorsque le signal d'état reçu a la même forme et ou la même fréquence qu'un signal de référence et à une valeur constante basse lorsque le signal d'état reçu n'a pas la même forme et la même fréquence que le signal de référence. Ce traitement permet de vérifier l'intégrité du signal, notamment qu'une information de vitesse nulle correspond avec un degré de certitude suffisant à une information de vitesse nulle émise par l'organe de contrôle 4.

Afin d'éviter toute corruption du signal électrique d'état dans son traitement par la chaîne de détection des fronts, produit par un retour intempestif d'un signal émis par le microcontrôleur, un mécanisme matériel anti-retour 12 est mis en place. Le niveau de fiabilité du mécanisme matériel anti-retour 12 augmente la sécurité.

La représentation par une diode sur les figures, est purement symbolique. On nomme mécanisme anti-retour tout mécanisme matériel empêchant une information électrique parasite, produite par le processeur 10, de générer un signal accepté par la chaîne matérielle indépendante. Le signal parasite étant créé par le processeur 10, ce dernier se retrouverait en mode commun sur le verrouillage de l'AVE. Le processeur pourrait alors à la fois générer la commande de verrouillage et l'inhibition de la chaîne matérielle indépendante. Il n'est pas nécessaire de détailler plus avant les différentes manières possibles de réaliser le mécanisme anti-retour, celles-ci étant connues par ailleurs ou pour le moins faciles à mettre en oeuvre par l'homme du métier à partir des connaissances générales de conception de circuits électroniques et des explications qui viennent d'être données.

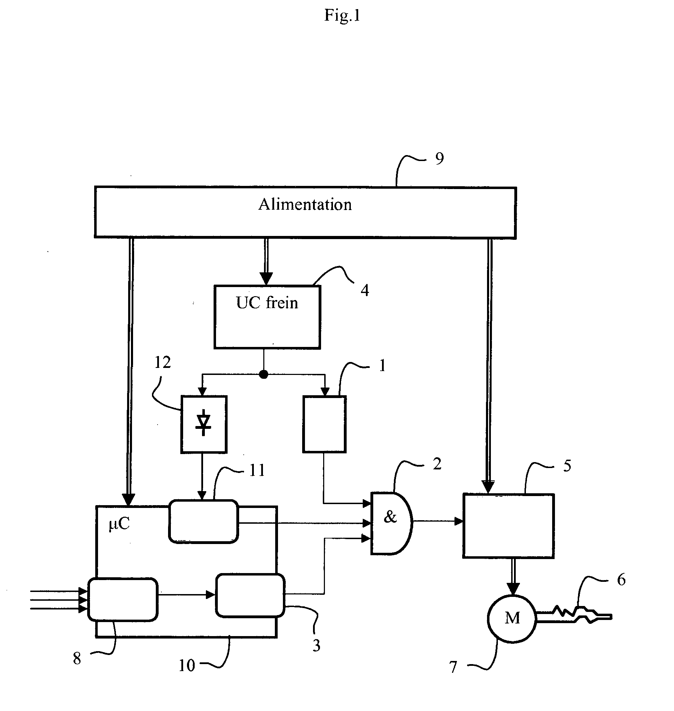

Le dispositif 2, illustré sur la figure 1 par une porte « ET » logique, fait la synthèse de trois informations afin d'autoriser ou non le verrouillage de la colonne de direction du véhicule. Une première information résulte de l'ordre d'exécution de l'action de verrouillage transmise sous forme multiplexée à un élément logiciel 8 d'acquisition exécuté par le processeur 10. Une deuxième information résulte de la détection des fronts du signal d'état par la première chaîne de transmission dont la nature matérielle est insensible aux défauts logiciels. Une troisième information résulte de la qualification de la forme et de la fréquence du signal par la deuxième chaîne de transmission dont les ressources logicielles permettent une vérification élaborée de la véracité de l'état du véhicule tel qu'il est communiqué par l'organe de contrôle 4.

Le dispositif 2 peut être réalisé au moyen d'une porte « ET » purement électronique comme représenté sur la figure 1.

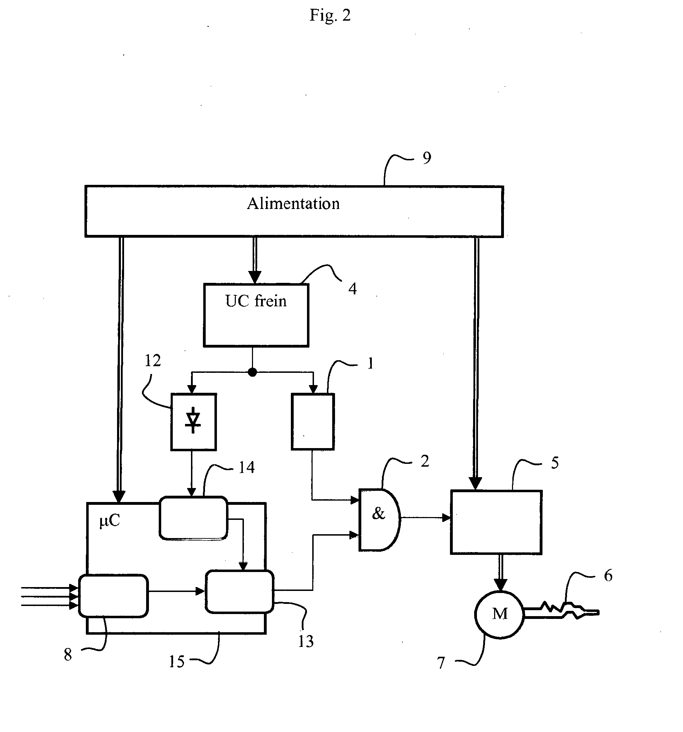

Le dispositif 2 peut aussi combiner une porte « ET » purement électronique comme représenté sur la figure 2 avec un traitement logiciel exécuté par le processeur 15. Le système illustré en figure 2 est identique à celui illustré en figure 1 à l'exception du processeur 15 et de sa connexion au dispositif 2.

Le processeur 15 est différent du processeur 10, essentiellement en ce qui concerne sa configuration logicielle. Le processeur 10 représenté en figure 1, comprend un élément logiciel de génération 3 connecté à un élément logiciel d'acquisition 8 agencé pour recevoir l'ordre d'exécution de l'action de verrouillage sous forme numérique par voie multiplexée, de façon à élaborer directement le signal électrique de commande transmis au dispositif 2. Le processeur 10 comprend d'autre part l'élément logiciel 11 connecté au dispositif 2. Différemment, le processeur 13 représenté en figure 2, comprend un élément logiciel de génération 13 connecté à l'élément logiciel d'acquisition 8, de façon à élaborer un signal électrique de commande transmis au dispositif 2 qui prend en compte le deuxième signal de contrôle transmis par la deuxième chaîne de transmission. Le processeur 15 comprend d'autre part un élément logiciel 14 identique à l'élément logiciel 11 sauf en ce qu'il est connecté à l'élément logiciel de génération 13 qui combine alors le deuxième signal de contrôle avec l'ordre d'exécution pour générer le signal de commande transmis au dispositif 2.

Seul le traitement du signal provenant de la détection des fronts, ne doit pas être logiciel.

Le dispositif 2 peut être réalisé d'autres manières que celles qui viennent d'être décrites sans sortir du cadre de la présente invention. Ainsi, la porte disjonctive logique peut être remplacée par deux ou trois relais dont chacune des bobines reçoit l'un des signaux reçus par le dispositif dont les contacts mis en série, sont reliés à la sortie du dispositif 2.

La sortie du dispositif 2 permet d'enclencher l'étage de commande 5 d'un moteur 7 qui verrouille la colonne par mouvement d'un pêne 6.

Le système conforme à l'invention permet de sécuriser la commande de verrouillage et présente plusieurs intérêts technico-économiques :
- il utilise une sortie standard des UC Frein pour obtenir le signal d'état du véhicule à l'arrêt,
- il est plus discriminant qu'un système basé sur un signal « Tout ou Rien », en effet il est très peu probable qu'un court circuit, même fluctuant reproduise exactement les caractéristiques attendues du signal d'état,
- la séparation d'une partie de la vérification du signal par une chaîne électronique (détection matérielle des fronts) rendu indépendante du microcontrôleur par le mécanisme anti-retour », permet d'éviter les modes communs et de satisfaire aux exigences de sécurité.

La prise en charge d'une partie de la vérification du signal par le microcontrôleur permet d'utiliser une électronique relativement simple, peu coûteuse et peu encombrante pour la chaîne électronique indépendante (détection matérielle des fronts),

Cette prise en charge d'une partie du signal par le microcontrôleur permet en outre un diagnostique de l'état du signal venant de l'UC Frein.

## Revendications

1. Système électrique de véhicule comprenant :
- un actionneur (7) agencé pour exécuter une action lorsqu'un signal électrique d'enclenchement est activé,
- un processeur (10, 15) agencé pour générer un signal électrique de commande de ladite action,
- un dispositif (2) agencé pour activer le signal électrique d'enclenchement lorsque le signal électrique de commande est généré,
- un organe de contrôle (4) agencé pour générer un signal électrique d'état ayant une valeur alternative qui indique un état du véhicule permettant d'exécuter ladite action et ayant une valeur continue qui indique un état du véhicule ne permettant pas d'exécuter ladite action,
- une première chaîne totalement matérielle, c'est-à-dire purement éléctrique ou éléctronique, comportant au moins un élément matériel de détection (1) connecté entre l'organe de contrôle (4) et le dispositif (2) pour générer un premier signal de contrôle qui retranscrit la valeur du signal d'état,
- une deuxième chaîne comportant au moins un élément logiciel de qualification (11, 14) connecté entre l'organe de contrôle (4) et le dispositif (2) pour générer un deuxième signal de contrôle qui retranscrit la valeur du signal d'état,
- le dispositif (2) étant agencé pour activer le signal électrique d'enclenchement à condition que le premier signal de contrôle et le deuxième signal de contrôle retranscrivent chacun la valeur du signal d'état qui indique l'état du véhicule permettant d'exécuter ladite action.

2. Système selon la revendication 1, **caractérisé en ce que** :
- l'élément matériel de détection (1) est agencé pour générer le premier signal de contrôle par détection d'une présence ou d'une absence de variations de la valeur du signal électrique d'état, et
- l'élément logiciel de qualification (11, 14) est agencé pour générer le deuxième signal de contrôle par qualification d'une forme et/ou d'une fréquence du signal électrique d'état en comparaison d'un signal de référence.

3. Système selon l'une des revendications 1 ou 2, **caractérisé en ce que** l'élément matériel (1) comprend un filtre de coupure des basses fréquences.

4. Système selon l'une des revendications précédentes, **caractérisé en ce que** l'actionneur (7) comprend un moteur agencé pour actionner un pêne (6) de façon à exécuter une action de verrouillage de colonne de direction et **en ce que** l'état du véhicule permettant d'exécuter ladite action, est une vitesse nulle du véhicule.

5. Système selon l'une des revendications précédentes, **caractérisé en ce que** la valeur alternative du signal d'état est sous forme de carrés et **en ce que** la valeur continue du signal d'état est nulle.

6. Système selon l'une des revendications précédentes, **caractérisé en ce que**, pour générer le signal électrique de commande, le processeur (10, 15) comprend un élément logiciel de génération (3, 13) connecté à un élément logiciel d'acquisition (8) agencé pour recevoir un ordre d'exécution de ladite action sous forme numérique.

7. Système selon la revendication 6, **caractérisé en ce que** le dispositif (2) comprend une porte électronique de conjonction logique comportant :
- une première entrée connectée à l'élément matériel (1) pour recevoir le premier signal de contrôle,
- une deuxième entrée connectée à l'élément logiciel de qualification (11) pour recevoir le deuxième signal de contrôle, et
- une troisième entrée connectée à l'élément logiciel de génération (3) pour recevoir le signal de commande.

8. Système selon la revendication 6, **caractérisé en ce que** l'élément logiciel de génération (13) est connecté au logiciel de qualification (14) de façon à générer le signal de commande si l'état du véhicule le permet, et
**en ce que** le dispositif (2) comprend une porte de conjonction logique comportant :
- une première entrée connectée à l'élément matériel (1) pour recevoir le premier signal de contrôle, et
- une deuxième entrée connectée à l'élément logiciel de génération (13) pour recevoir le signal de commande.

9. Système selon l'une des revendications précédentes, **caractérisé en ce que** la deuxième chaîne comprend un mécanisme matériel anti-retour (12) entre l'organe de contrôle (4) et le processeur (10, 15) qui héberge l'élément logiciel de qualification (11, 14).

## Patentansprüche

1. Elektrisches System für ein Fahrzeug, das Folgendes aufweist:
- ein Stellorgan (7), das eingerichtet ist, um eine Aktion auszuführen, wenn ein elektrisches Auslösesignal aktiviert wird,
- einen Prozessor (10, 15), der eingerichtet ist, um ein elektrisches Befehlssignal der Aktion zu erzeugen,
- eine Vorrichtung (2), die eingerichtet ist, um das elektrische Auslösesignal zu aktivieren, wenn das elektrische Befehlssignal erzeugt wird,
- ein Steuerorgan (4), das eingerichtet ist, um ein elektrisches Zustandssignal zu erzeugen, das einen alternativen Wert hat, der einen Zustand des Fahrzeugs anzeigt, der es erlaubt, die Aktion auszuführen, und das einen kontinuierlichen Wert hat, der einen Zustand des Fahrzeugs anzeigt, der es nicht erlaubt, die Aktion auszuführen,
- eine erste vollständig materielle Kette, das heißt, die rein elektrisch oder elektronisch ist, die mindestens ein materielles Erfassungselement (1) aufweist, das zwischen dem Steuerorgan (4) und der Vorrichtung (2) zum Erzeugen eines ersten Steuersignals, das den Wert des Zustandssignals wiedergibt, verbunden ist,
- eine zweite Kette, die mindestens ein Qualifikationssoftwareelement (11, 14) aufweist, das zwischen dem Steuerorgan (4) und der Vorrichtung (2) zum Erzeugen des zweiten Steuersignals, das den Wert des Zustandssignals wiedergibt, verbunden ist,
- wobei die Vorrichtung (2) eingerichtet ist, um das elektrische Auslösesignal unter der Bedingung zu aktivieren, dass das erste Steuersignal und das zweite Steuersignal jeweils den Wert des Zustandssignals wiedergeben, der den Zustand des Fahrzeugs anzeigt, der das Ausführen der Aktion erlaubt.

2. System nach Anspruch 1, **dadurch gekennzeichnet, dass**:
- das materielle Erfassungselement (1) eingerichtet ist, um das erste Steuersignal durch Erfassen einer Gegenwart oder einer Abwesenheit von Variationen des Werts des elektrischen Zustandssignals zu erzeugen, und
- das Qualifikationssoftwareelement (11, 14) eingerichtet ist, um das zweite Steuersignal durch Qualifikation einer Form und/oder einer Frequenz des elektrischen Zustandssignals im Vergleich zu einem Bezugssignal zu erzeugen.

3. System nach einem der Ansprüche 1 oder 2, **dadurch gekennzeichnet, dass** das materielle Element (1) ein Passfilter der niedrigen Frequenzen aufweist.

4. System nach einem der vorhergehenden Ansprüche, **dadurch gekennzeichnet, dass** das Stellorgan (7) einen Motor aufweist, der eingerichtet ist, um einen Riegel (6) derart zu betätigen, dass eine Verriegelungsaktion der Lenksäule ausgeführt wird, und dass der Zustand des Fahrzeugs, der es erlaubt, die Aktion auszuführen, eine Geschwindigkeit gleich null des Fahrzeugs ist.

5. System nach einem der vorhergehenden Ansprüche, **dadurch gekennzeichnet, dass** der alternative Wert des Zustandssignals die Form von Quadraten hat, und dass der Gleichstromwert des Signals gleich null ist.

6. System nach einem der vorhergehenden Ansprüche, **dadurch gekennzeichnet, dass** zum Erzeugen des elektrischen Befehlssignals der Prozessor (10, 15) ein Erzeugungssoftwareelement (3, 13) aufweist, das mit einem Erfassungssoftwareelement (8) verbunden ist, das eingerichtet ist, um einen Ausführungsbefehl der Aktion in digitaler Form zu empfangen.

7. System nach Anspruch 6, **dadurch gekennzeichnet, dass** die Vorrichtung (2) ein elektronisches Gate zur UND-Verknüpfung aufweist, das Folgendes aufweist:
- einen ersten Eingang, der mit dem materiellen Element (1) zum Empfangen des ersten Steuersignals verbunden ist,
- einen zweiten Eingang, der mit dem Qualifikationssoftwareelement (11) verbunden ist, um das zweite Steuersignal zu empfangen, und
- einen dritten Eingang, der mit dem Erzeugungssoftwareelement (3) verbunden ist, um das Befehlssignal zu empfangen.

8. System nach Anspruch 6, **dadurch gekennzeichnet, dass** das Erzeugungssoftwareelement (13) mit der Qualifikationssoftware (14) derart verbunden ist, dass das Befehlssignal erzeugt wird, wenn der Zustand des Fahrzeugs es erlaubt, und
dass die Vorrichtung (2) ein elektronisches Gate zur UND-Verknüpfung aufweist, das Folgendes aufweist:
- einen ersten Eingang, der mit dem materiellen Element (1) verbunden ist, um das erste Steuersignal zu empfangen, und
- einen zweiten Eingang, der mit dem Erzeugungssoftwareelement (13) verbunden ist, um das Befehlssignal zu empfangen.

9. System nach einem der vorhergehenden Ansprüche, **dadurch gekennzeichnet, dass** die zweite Kette einen materiellen Rücklaufschutzmechanismus (12) zwischen dem Steuerorgan (4) und dem Prozessor (10, 15) aufweist, in dem sich das Qualifikationssoftwareelement (11, 14) befindet.

## Claims

1. An electrical system for a vehicle including:
- an actuator (7) arranged for executing an action when an electrical interlocking signal is activated,
- a processor (10, 15) arranged for generating an electrical signal for commanding the said action,
- a device (2) arranged for activating the electrical interlocking signal when the electrical command signal is generated,
- a control member (4) arranged for generating an electrical status signal having an alternative value which indicates a status of the vehicle permitting the said action to be executed and having a continuous value which indicates a status of the vehicle not permitting the said action to be executed,
- a first totally material chain, i.e. purely electrical or electronic, comprising at least one material detection element (1) connected between the control member (4) and the device (2) for generating a first control signal which retranscribes the value of the status signal,
- a second chain comprising at least one software qualification element (11, 14) connected between the control member (4) and the device (2) for generating a second control signal which retranscribes the value of the status signal,
- the device (2) being arranged for activating the electrical interlocking signal provided that the first control signal and the second control signal each retranscribe the value of the status signal which indicates the status of the vehicle permitting the said action to be executed.

2. The system according to Claim 1, **characterized in that**:
- the material detection element (1) is arranged for generating the first control signal by detection of a presence or an absence of variations of the value of electrical status signal, and
- the software qualification element (11, 14) is arranged for generating the second control signal by qualification of a form and/or of a frequency of the electrical status signal in comparison with a reference signal.

3. The system according to one of Claims 1 or 2, **characterized in that** the material element (1) includes a cut-off filter of low frequencies.

4. The system according to one of the preceding claims, **characterized in that** the actuator (7) includes a motor arranged for actuating a bolt (6) so as to execute a locking action of the steering column and **in that** the status of the vehicle permitting the said action to be executed is a zero speed of the vehicle.

5. The system according to one of the preceding claims, **characterized in that** the alternative value of the status signal is in the form of squares and **in that** the continuous value of the status signal is zero.

6. The system according to one of the preceding claims, **characterized in that**, to generate the electrical command signal, the processor (10, 15) includes a software generation element (3, 13) connected to a software acquisition element (8) arranged for receiving an order for execution of the said action in digital form.

7. The system according to Claim 6, **characterized in that** the device (2) includes an electronic logical conjunction gate comprising:
- a first input connected to the material element (1) to receive the first control signal,
- a second input connected to the software qualification element (11) for receiving the second control signal, and
- a third input connected to the software generation element (3) for receiving the command signal.

8. The system according to Claim 6, **characterized in that** the software generation element (13) is connected to the qualification software (14) so as to generate the command signal if the status of the vehicle permits this, and
**in that** the device (2) includes a logical conjunction gate comprising:
- a first input connected to the material element (1) for receiving the first control signal, and
- a second input connected to the software generation element (13) for receiving the command signal.

9. The system according to one of the preceding claims, **characterized in that** the second chain includes a non-return material mechanism (12) between the control member (4) and the processor (10, 15) which hosts the software qualification element (11, 14).
